# EUROPEAN PATENT APPLICATION

(11) **EP 4 233 527 A2**
(43) Date of publication of application: **30.08.2023**
(21) Application number: 23174656.1
(22) Date of filing: 15.10.2018
(51) Int. Cl.: A01G 31/06

(54) **AEROPONICS APPARATUS**

(30) Priority: 13.10.2017 GB 201716903
(62) Divisional of application: 18793370.0
(71) Applicant: Lettus Grow Ltd, Bristol BS4 4EU (GB)
(72) Inventor: Farmer, Jack Richard, Bristol (GB); Crowther, Benjamin George, Bristol (GB); Guy, Charles Douglas, Bristol (GB)
(74) Representative: Script IP Limited

(57) **Abstract**

Aeroponics apparatus is disclosed, which includes a grow bed tray having a base and at least two side-walls, the grow bed tray being able to hold a plant support at a position spaced from the base of the grow bed tray, and a nebulizer for nebulizing nutrient solution, the nebulizer located at the base of the grow bed tray and comprising an ultrasonic transducer and a holding for holding the ultrasonic transducer. Also disclosed is a method for crop production using the aeroponics apparatus by either flowing nutrient solution into the base of the grow bed tray to contact at least the roots of the crops or providing nutrient solution at the base of the grow bed tray and nebulizing the nutrient solution so that the nebulized nutrient solution contacts at least the roots of the crops.

## Description

The present invention relates to aeroponic apparatus and methods of growing crops and other plants using such aeroponic apparatus.

Hydroculture such as hydroponics or aeroponics is a method of growing crops without soil. Aeroponics, in particular, offers the benefits of high density and rapid growth of crops.

Aeroponic systems supply crops with water and nutrients by spraying roots suspended below a plant support with a sprayed, nutrient-rich water solution. The plants are supported by, and their leaves and crowns extend above, the plant support. Aeroponic systems allow air to contact both the canopy and the roots of the crop plants so the crops grow with a plentiful supply of oxygen, carbon dioxide, water, and nutrients. Improved aeration of the roots is one of the advantages of aeroponics over hydroponics.

The sprayed nutrient solution may be produced in low pressure systems by low-pressure pumps delivering nutrient solution *via* jets. Low pressure systems are generally considered suitable only for domestic or demonstration aeroponics units and not large commercial aeroponics systems.

JP H03 1523, CN-A-205727459 and CN-A-205584993 each disclose a domestic scale aeroponics system.

KR-A-20130074172 discloses a small-scale multi-level system with a sonicating atomizer submerged in liquid and the aerosol being delivered to the plant roots with the aid of a fan.

US-A-5,937,575 discloses apparatus and methods for stabilization of ultrasonically generated nutrient fog (i.e. a plume, or ensemble of aerosol). To eliminate the sensitivity to the humidity and temperature of the intake air, the fog is recirculated from the growth chamber to the fog-generating reservoir. The chamber and reservoir are connected by a fog supply conduit and a fog return conduit which form a fog circulation circuit. The recirculation eliminates the fog density dependence on intake air humidity and stabilizes the amount of nutrients used.

CN-A-106508655 and CN-A-106577245 disclose aeroponic culture methods for *Polygonatum odoratum* with ultrasonic nebulizers being arranged below the field planting plate of the apparatus suspended in a space above the base of the aeroponic culture buckets.

US-A-5,1 36,804 discloses apparatus having conduit means to direct generated fog to the growing compartments, the fog being produced by a fog generator including a container for receiving a quantity of water, and an ultrasonic transducer located within the container to be immersed in the water when received therein.

KR-A-2014 0088760 discloses an ultrasonic fogponics system wherein spray nutrient solution can be uniformly supplied by a fog conduit from the fog generating system and requires fewer ultrasonic vibration modules.

Other disclosures also make use of ultrasonic fog or mist generators and mist or fog supply conduits for supplying the mist to the growing compartments, for example, CN-A-101803561, CN-A-105594578, CN-A-2011393457, CN-A-204168859, CN-A-102845293, CN-A-202197639, and CN-A-102870659.

CN-A-201557432 discloses an aeroponic culture greenhouse with a spray nozzle of an ultrasonic atomiser arranged at the top part in the greenhouse above the planting area.

Commercial and high density, high pressure aeroponic (HPA) cultivation uses high-pressure pumps delivering nutrient solution through spray nozzles. Spray nozzles in high pressure aeroponic facilities generally provide a wide spray pattern and are located along pressurised feedlines at regular intervals. Nutrient solution may be atomised into droplets in a range of size distributions depending on the operating pressure of the HPA system. Control over droplet size at the facility level is extremely difficult, due to variation in nozzle quality and the pressure drop down the feedline. Control of the amount of water and nutrients supplied to the plant roots is controlled by the duration of spraying.

High-velocity droplets generated by HPA systems can degrade fine root structures and the cell debris generated can clog HPA nozzles. Consequently, the roots must be sufficiently spaced from the nozzles. Interception of water droplets by roots (especially in dense root beds) can leave roots at the periphery of the bed un-watered so in HPA systems nozzle spray arcs are designed to overlap, but this results in increased costs, increased system complexity, and increased points of failure in the pressurised feedlines. The necessity for relatively wide spray angles also means the grow beds in HPA systems must be relatively high, reducing the achievable bed density.

HPA nozzles are particularly prone to clogging which means that HPA systems require complex water treatment and filtration or require the use of fresh water containing no particulates. This increases the cost and complexity of an HPA system. Furthermore, each HPA nozzle tends to be arranged so it is switched on or off with the whole feed line (which may have a large number of nozzles connected). Thus, it is generally not possible to control specific parts of the growing area.

There is, therefore, a need for improved aeroponics systems that reduce or obviate the problems with known systems.

It is an aim of the present invention to address this need.

The present invention accordingly provides, in a first aspect, aeroponics apparatus comprising, a tray (i.e. a grow bed tray) having a base and at least two side-walls, the grow bed tray being adapted to hold a plant support at a position spaced from the base of the grow bed tray (to form a root space), and a nebulizer for nebulizing nutrient solution, the nebulizer located at the base of the grow bed tray and comprising an ultrasonic transducer and a fixing portion for fixing the ultrasonic transducer in position.

This is advantageous because use of nebulizers with ultrasonic transducers allows control of droplet size and droplet speed and to adapt and/or control droplet size, aerosol (mist) density, or duration of application of aerosol (misting), for the age, species, and health of crop plants within the or a grow bed tray. Use of ultrasonic nebulizers also allows a shallower grow-bed to increase efficiency of use of vertical space within an aeroponic farm and a consequent increase in yield per unit area.

The ultrasonic transducers may be located at the base of the grow bed tray. The generated mist may disperse in the space between the surface of the solution and the plant support (i.e. in the root space where, in use, the roots of the crops are suspended) as a creeping flow (laterally and vertically) allowing the base of the grow bed tray to be closer to the plant support than in HPA systems. As mist generation is not by a high-pressure system, root damage and nozzle clogging are much reduced or avoided, reducing facility down time.

In one, preferred embodiment, the ultrasonic transducer or ultrasonic transducers may be mounted under the base of the grow bed tray (i.e. may be under-mounted). The under-mounted ultrasonic transducer(s) may be held in a holder so that the ultrasonic transducer is in contact with (and preferably compressed against) the base of the grow bed tray. Generally, this arrangement provides that there is a single layer (usually a relatively thin, single layer) of e.g. plastics or metallic material between the ultrasonic transducer and the nutrient solution, in use. Preferably the single layer of e.g. plastics or metallic material provides good acoustic transmission properties.

Under-mounting is greatly advantageous, especially in a commercial facility with multiple ultrasonic transducers because it allows for improved access to and removal of faulty ultrasonic transducers and/or other components without shutting down all ultrasonic transducers / components in the grow bed. Furthermore, the under-mounted fixing portion of the ultrasonic transducer assists in heat dissipation. This can reduce heat radiating into the root space, which can have a negative effect on plant root growth. Also, under-mounting significantly reduces or eliminates interaction of root detritus with the ultrasonic transducer, extending the lifetime of the ultrasonic transducers and resulting in much less cleaning being required, improving operational efficiency and reducing cost.

The ultrasonic transducer may be mounted into a holder that may be permanently attached to the grow bed tray. Preferably, the holder has a wipe-clean surface / interface. Preferably, the ultrasonic transducer is removable from the holder ( e.g. may be screwed/compressed into position) without removing the holder from the grow bed tray.

The apparatus may also comprise one or more nebulizer shields to shield the transducer from plant roots and otherwise protect the transducers, in use. The nebulizer shield or shields may be formed into the base of the grow bed tray.

The holder and/or fixing portion may be such that the interface between the transducers and the nutrient solution, in use, is formed of a plastics material (i.e. an interface of nutrient solution, plastics) or a metallic material (i.e. an interface of nutrient solution: metallic material). The fixing portion may be provided by mechanical and/or adhesive fixings, for example, one or more of the following: threaded aperture, adhesive, threaded spike, bolts or a plastic fixing portion.

Preferably, in use, the roots of the crop will be suspended in the root space. The nutrient solution may contact the roots of the crops as an aerosol of nutrient solution in air.

At different times in any drain/flood cycle that may be used during operation of the aeroponics apparatus of the invention, part of the roots of the crop may be immersed in nutrient solution but the roots are not generally constantly immersed. Even with part of the roots being immersed, the rest of the roots are in contact with the aerosol produced by the apparatus. The volume of roots that may be periodically immersed in the nutrient solution, is generally dependent on crop type, and the time spent growing the crop (which is related to the size of the plant). However, during aeroponic operation there will generally only be a small proportion of the root space (by volume of the root space) taken up by the nutrient solution. During operation of the aeroponic apparatus of the invention, plants grow aeroponically for the first portion of their life, the aeroponic conditions boosting growth rate. At later stages of growth, the tap roots of the crops may enter the main water body (i.e. nutrient solution), which may provide additional advantages including increasing crop resilience to water stress whilst the rest of the roots gain the benefits of the aeroponic conditions.

Usually, microgreens (typically grown over 5 - 10 days before harvesting) have little (<10%, often <5% by volume) of their root volume periodically in nutrient solution. Leafy greens (e.g. pea shoots, lettuce typically grown for 4 weeks before harvesting) may periodically have a larger portion of their root volume in nutrient solution, for example < 50% by volume, usually < 40 % by volume. Longer growing leafy green crops e.g. basil (which may be grown over three months and trimmed periodically), and fruiting and rooting crops may periodically have a significant portion of their root volume submersed in the nutrient solution (e.g. <70% by volume). In use, therefore, periodically 70% or less of the volume of the roots of the crop may be immersed in liquid (e.g. nutrient solution), usually 50% or less of the volume of the roots of the crop may be immersed in liquid (e.g. nutrient solution), more usually 20% or less of the volume of the roots of the crop may be immersed in liquid (e.g. nutrient solution), and most usually 10% or less (e.g. 5% or less) of the volume of the roots of the crop may be immersed in liquid (e.g. nutrient solution).

In the apparatus, adjusting the frequency of the ultrasonic transducer changes droplet size. Adjusting voltage changes the rate of droplet production. Individual ultrasonic transducers acting on a body of water generate predictable droplet size distributions.

In use, nutrient solution droplets are emitted as a mist/aerosol from the water surface that disperses through the bed in all directions in a creeping flow. The apparatus may provide control of droplet size, usually producing droplets within the range of between 1 to 1 00 µm in diameter.

The fixing portion may comprise an adhesive, optionally an epoxy adhesive and/or another suitable adhesive.

Preferably, the fixing portion is acoustically transmitting.

In one embodiment, an ultrasonic transducer may be adhered to the base of the grow bed tray using an adhesive, thus the nebulizer would comprise the transducer and a fixing portion comprising adhesive. In this embodiment it is preferred that the location at the base of the grow bed tray, where the transducer is adhered, is at least partially acoustically transmitting.

The fixing portion may comprise a holder, optionally a holder that is detachable from the grow bed tray.

The ultrasonic transducer is preferably also detachable from the holder.

The holder will usually be acoustically engineered. The holder may comprise a part formed of an acoustically transparent material (e.g. an acoustic lens).

To achieve more control over droplet size or increased flow of mist / aerosol, the apparatus may comprise at least two ultrasonic transducers. In this case an, or each, ultrasonic transducer may have a predetermined or different resonant frequency. A predetermined resonant frequency will preferably be in the kilohertz to megahertz range and may be 200 kHz to 100 MHz with the droplet size in the aerosol generated being smaller at higher frequency.

Preferably, each grow bed tray comprises a plurality of ultrasonic transducers. This is advantageous because it improves even supply of the aerosol to the roots, in use. Each grow bed tray may comprise 2 to 48 ultrasonic transducers, preferably 4 to 36 ultrasonic transducers, more preferably 6 to 24 ultrasonic transducers.

Preferably, where there is a plurality of ultrasonic transducers, each ultrasonic transducer may be controllable independently. This is advantageous in a commercial facility because it enables greater control over growing conditions over each part of the apparatus.

The apparatus may further comprise one or more fans to circulate air and further improve the even supply of the aerosol to the roots.

Examples of ultrasonic transducers may have a resonant frequency of around 600kHz, 1.7 MHz, 2.4 MHz and/or 3 MHz.

Usually, the or each ultrasonic transducer may be a piezoelectric transducer.

Conveniently, the apparatus may further comprise a liquid port. The liquid port may act as a liquid inlet for allowing nutrient solution to flow into the base of the grow bed tray and may further act as a liquid outlet for allowing liquid to flow out of the base of the grow bed tray. There may instead be a liquid inlet and a liquid outlet.

The base of the grow bed tray may be shaped to form at least one sump to collect nutrient solution, and wherein the nebulizer is located at, or in, the sump. This may be advantageous because it allows relatively small volumes of nutrient solution to cover the nebulizer, in use.

Preferably, however, the base of the grow bed tray is substantially flat to reduce the unwanted retention of plant matter or other organic matter and/or stagnant water. The base of the grow bed tray may be sloped (i.e. have a gradient, usually a shallow gradient) to improve draining of the nutrient solution and cleaning.

Generally, the liquid port/inlet may be connectable to an inlet pipe connected to a reservoir, the reservoir for holding nutrient solution. The apparatus will usually further comprise a pump for pumping nutrient solution from the reservoir into the liquid port /inlet. Thus, the apparatus may further comprise one or more inlet pipe(s), a reservoir and optionally at least one pump. The apparatus may also comprise one or more valves, one or more filters and/or a nutrient dosing system.

The nutrient solution may be a by-product of aquaculture (i.e. raising aquatic animals such as snails, fish, crayfish or prawns in tanks).

The grow bed tray is preferably adapted to hold a plant support spaced from the base of the grow bed tray by one or more supports located on the sidewalls of the grow bed tray. The grow bed tray may be adapted to hold a plant support spaced from the base of the grow bed tray by mechanical fixings and/or one or more supports may be formed by the shape of the sidewall or sidewalls of the grow bed tray.

The grow bed trays may be modular. Thus, one or more of the sidewalls may be detachable. The apparatus may further comprise grow bed tray attachments to attach two or more grow bed trays together. A grow bed tray or a plurality of grow bed trays attached together may form the grow bed of the apparatus.

A modular, ultrasonic-driven aeroponic grow bed system for commercial operation is greatly advantageous because it allows use of aeroponics for the production of crops efficiently and on a larger scale that previously achieved. In use, the apparatus may be such that the grow bed trays, the plant supports and/or the grow bed (i.e. the combination comprising at least one grow bed tray and at least one plant support) may be lifted and/or moved around the facility either manually or by automated systems.

It is useful to monitor the growing conditions and crops with one or more sensors. The sensors may be moisture (e.g. relative humidity), light, oxygen, pH, temperature, carbon dioxide and/or root density sensors (e.g. sensors detecting light transmission through the root bed). Thus, the apparatus may further comprise one or more sensor fixings for fixing sensors in the grow bed tray. The apparatus may further comprise one or more sensors. Sensors may include one or more sensors, for example, to measure or determine weight / mass, surface tension, temperature, viscosity, water level, density of the nutrient solution, moisture (for example vapour pressure and/or relative humidity), light, oxygen, pH, gas composition, sound intensity, pressure (of the nutrient solution or of gas phase), carbon dioxide and/or roots density. Particularly useful sensors include water level, temperature (of the gas and/or nutrient solution) and relative humidity. One or more sensors may be fixed to the sensor fixings. The apparatus may of course also have one or more of the same sensors associated with it in order to measure and/or determine the conditions and properties of the surroundings.

The apparatus may comprise one or more light fittings located above, at the sides and/or below the grow bed tray or grow bed trays so that illumination may be provided when lighting is installed.

The apparatus may further comprise a plant support. The plant support may comprise a plant support tray and/or a fibrous material (e.g. may comprise fibrous mat(s)). Other plant supports that may be suitable include plugs and/or pots. The plant support would generally be removable.

A plant support tray may be of plastics material. The plant support trays may comprise support portions for support of plants (and/or support for pots for plants). Such support portions may include a plurality of apertures, for example, in (and defined by) the base of the plant support tray. It is advantageous if each plant support tray is shaped so that the plant support trays are stackable for storage.

Thus, in use, the apparatus may comprise a plant support, and nutrient solution covering the nebulizer. Once crops are planted, the apparatus may comprise crops in the plant support, the roots of the crops located in the space (i.e. root space, which is usually an air space) between the plant support and the base of the grow bed tray.

A great advantage of the present invention is that it provides improved aeroponic efficiency and operational efficiency. In particular, mounting the nebulizer in the base of the grow bed tray is of great operational benefit because it reduces apparatus downtime and the need for apparatus cleaning. Furthermore, the apparatus (and method) of the present invention improves the resolution of control of irrigation to aid in water saving.

Thus, in a second aspect, the present invention provides, a method for crop production, the method comprising, a) providing aeroponics apparatus according to the first aspect, b) providing a plant support at the position spaced from the base of the grow bed tray, c) providing crops in the plant support, and either: i) flowing nutrient solution into the base of the grow bed tray to contact at least the roots of the crops, and/or ii) providing nutrient solution at the base of the grow bed tray and nebulizing the nutrient solution so that the nebulized nutrient solution contacts at least the roots of the crops.

Preferably, nebulizing the nutrient solution comprises nebulizing the nutrient solution to provide a predetermined and/or controllable droplet size distribution. The droplet size distribution may comprise droplets having a diameter in the range 1to 100 µm, preferably 5 to 80 µm. Droplet size may be measured by a number of methods, for example, using an optical microscope to determine the size distribution of the droplets.

In one embodiment, the method may further comprise providing one or more root density sensors, to determine the density of the root bed, and nebulizing the nutrient solution with a predetermined resonant frequency to generate a predictable (and controllable) droplet size distribution corresponding to the optimum droplet size distribution for the density of the root bed.

The nutrient solution may be a by-product of aquaculture (i.e. raising aquatic animals such as snails, fish, crayfish or prawns in tanks).

Advantageously, the apparatus and method of the present invention improves crop yield compared to known apparatus and methods.

Crops that may be suitable for the apparatus and method of the present invention include (but are not limited to) salad crops (for example baby-leaf lettuce, rocket, watercress), herbs (for example basil, coriander), spring onions, root vegetables (for example carrots, radish, wasabi), fruiting crops (for example peppers, strawberries, tomatoes) and micro-greens (for example radish, pea, sunflower, leek).

In this specification mist refers to an aerosol of liquid (e.g. aqueous solution) droplets in gas (e.g. air).

Embodiment of the present invention will now be described with reference to the following figures, in which:
FIG. 1a) is a perspective view of apparatus according to the invention of a two tray grow bed, b) a side view and c) a section on A - A of Figure 1b).
FIG. 2 shows a perspective view of apparatus according to the invention of a one tray grow bed, b) a side view and c) a section on B - B of Figure 2b).
FIG. 3 shows a schematic view of apparatus according to the invention.
FIG. 4 shows a perspective view of a grow bed (single grow bed tray) according to another embodiment of the invention.
FIG. 5 shows a partially exploded perspective view of a grow bed comprising two grow bed trays connected together.
FIG. 6a shows a perspective view of a plant support in the form of a plant support tray suitable for use with the grow beds as shown in FIG.4 and FIG. 5.
FIG. 6b shows a perspective view of ten plant support trays as shown in FIG. 6a stacked for storage.
FIG. 7 shows a perspective view of an aeroponic apparatus according to the invention ready-for-use comprising a racked arrangement of three grow beds each grow bed having one grow bed tray and five plant support trays.

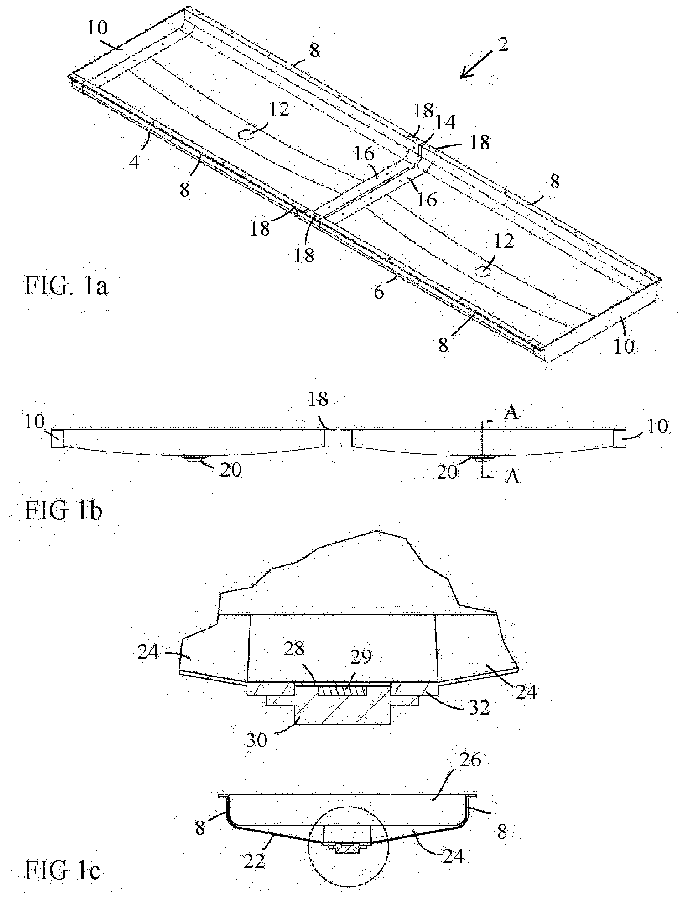

Figure 1 shows an apparatus according to the invention of a two tray grow bed 2. The grow bed 2 has two grow bed trays 4, 6, a first grow bed tray 4 and a second grow bed tray 6 connected together at connection 14 by base connectors 16 and side connectors 18. Each grow bed tray has side walls 8, end walls 10, and a base 22. The base 22 has a profile to form a sump 24 for collecting nutrient solution (not shown) and nebulizer port 12 for nebulizer 20 situated in the sump 24 so the nebulizer is conveniently covered with nutrient solution when in use. As seen in the detail in Figure 1(c), the nebulizer 20 comprises a nebulizer holder with nebulizer holder lower part 30 and nebulizer holder upper part 28 and an ultrasonic transducer 29 comprising a piezoelectric disc. The nebulizer holder 28, 29, 30 is detachably fixed to the base of the grow bed tray at the nebulizer interface 32 on the external surface of the nebulizer port 12.

The ultrasonic transducers 29 may have resonant frequencies in the kilohertz to megahertz range with the droplet size in the aerosol / mist generated being smaller with higher frequency.

Each grow bed tray has supports (not shown) on side walls 8 to hold a plant support (not shown) spaced from the base 22 of the grow bed tray 2, forming a root space 26.

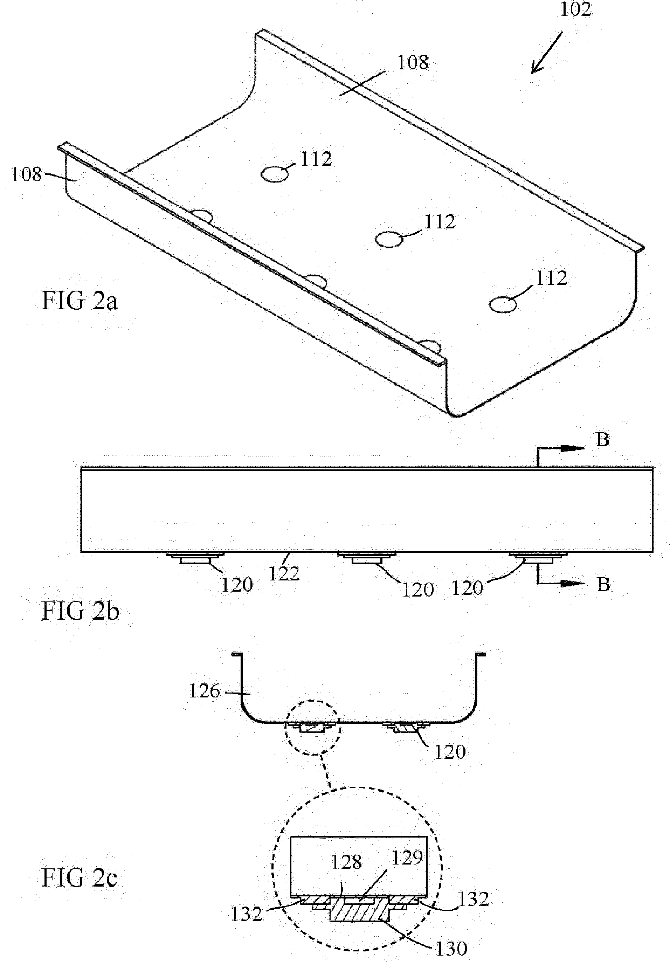

Figure 2 shows a second embodiment of apparatus according to the invention, comprising a single grow bed tray 102 with side walls 108, no end wall (for easier connection to another grow bed tray if desired), six nebulizers ports 112 holding nebulizers 120 distributed over the base 122 of the grow bed tray, each having under-mounted ultrasonic transducers 129 held by nebulizer holders. The nebulizers each comprise nebulizer holder lower part 130, and nebulizer holder upper part 128, and the ultrasonic transducer 129 comprising a piezoelectric disc. The nebulizer holder 128, 129, 130 is detachably fixed to the base of the grow bed tray at the nebulizer interface 132 on the external surface of the nebulizer port 112.

The ultrasonic transducers 129 may have resonant frequencies in the kilohertz to megahertz range (e.g. 200 kHz to 100 MHz) with the droplet size in the aerosol / mist generated generally being smaller with higher frequency.

The grow bed tray 102 has supports (not shown) on side walls 108 to hold a plant support (not shown) spaced from the base 122, forming a root space 126.

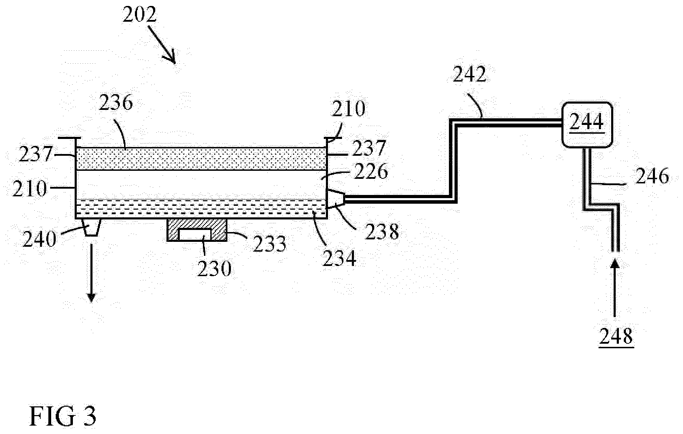

Figure 3 is a schematic of apparatus according to the invention. A grow bed of a single grow bed tray 202 has side walls 210 with supports 237 holding a plant support mat 236 above the base of the grow bed tray to form a root bed space 226. Nutrient solution 234 immerses a nebulizer holder 232 holding an ultrasonic transducer 230. When activated the nebulizer will produce a mist of nutrient solution 234 which disperses throughout the root bed space 226.

Nutrient solution 234 is supplied through inlet 238 from reservoir 248 and supplied through first conduits 246, low pressure pump 244 and second conduit 242.

Excess nutrient solution is removed through outlet 240.

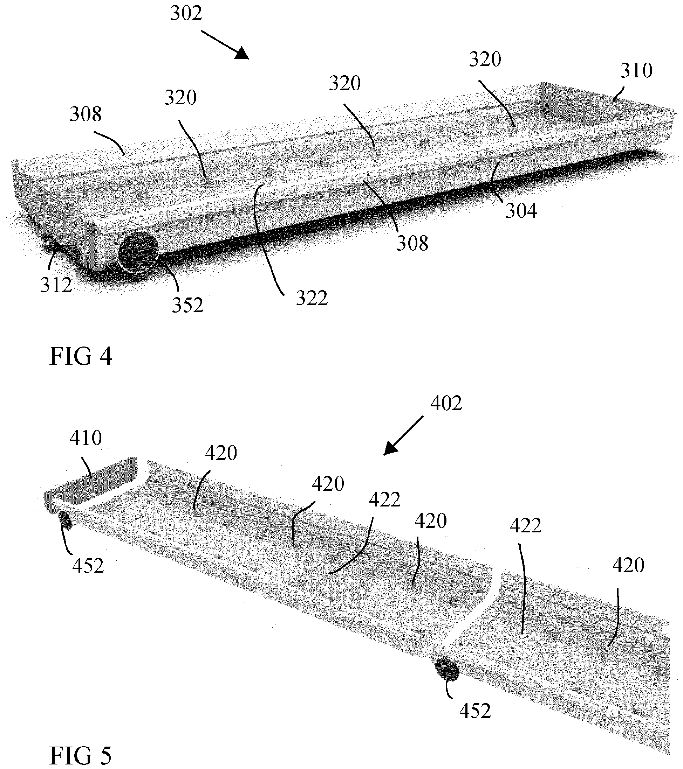

Figure 4 shows a view of a grow bed according to another embodiment of the invention comprising a single grow bed tray 302 with side walls 308, end walls 3 10, a plurality of nebulizer shields 320 distributed over the base 322 of the grow bed tray, each having an ultrasonic transducer (not shown) mounted underneath the nebulizer shield 320. The nebulizer shields 320 shield the transducer from the plant roots and otherwise protects them in use. The base 322 of the grow bed tray 302 is otherwise substantially flat and even for easier cleaning, with no sharp corners inside the grow bed tray 302. The grow bed tray 302 comprises a liquid port 312 for inlet and outlet of nutrient solution/waste liquid and a control panel 352.

Figure 5 shows an aeroponics apparatus according to an embodiment of the invention comprising a grow bed 402 comprising two grow bed trays. The two grow bed trays are connectable together by removal of the side walls 410 between them and use of attachment fixings (not shown). A plurality of nebulizer shields 420 are distributed over the base 422 of the grow bed trays, each having an ultrasonic transducer (not shown) mounted underneath the nebulizer shield 420. The nebulizer shields 420 shield the transducer from the plant roots and otherwise protect the ultrasonic transducers in use. The base 422 of the grow bed trays are otherwise substantially flat and even for easier cleaning, with no sharp corners. The grow bed trays each comprise a control panel 452.

The ultrasonic transducers are mounted under the base of the grow bed tray (i.e. are under-mounted) and may be held in a holder so that the ultrasonic transducer is in contact with (and preferably compressed against) the base of the grow bed tray. Generally, this arrangement provides that there is a single layer (usually a relatively thin, single layer) of e.g. plastics or metallic material between the ultrasonic transducer and the nutrient solution, in use. The single layer of e.g. plastics or metallic material provides good acoustic transmission properties.

The ultrasonic transducer may be mounted into a holder that may be permanently attached to the grow bed tray. The holder usually has a wipe-clean surface / interface, and the ultrasonic transducer is removable from the holder (e.g. may be screwed/compressed into position without removing the holder).

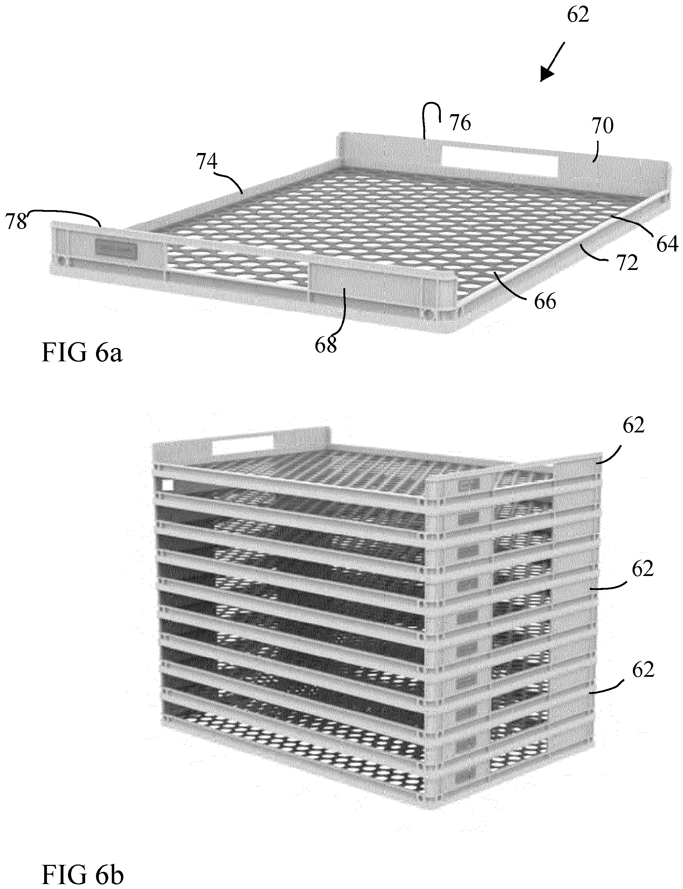

Figure 6a shows a plant support in the form of a plant support tray 62 for use with the grow bed trays illustrated in Figure 4 and Figure 5. The plant support tray 62 is of a plastics material and comprises a base 64 with apertures 66 to act as supports for crops. The plant support tray 62 comprises high side walls 68, 70 and low side walls 72, 74. The tops of the high side walls 68, 70 are shaped to allow convenient stacking with other plant support trays.

Figure 6b shows a plurality of plant support trays 62 according to Figure 6a stacked for storage.

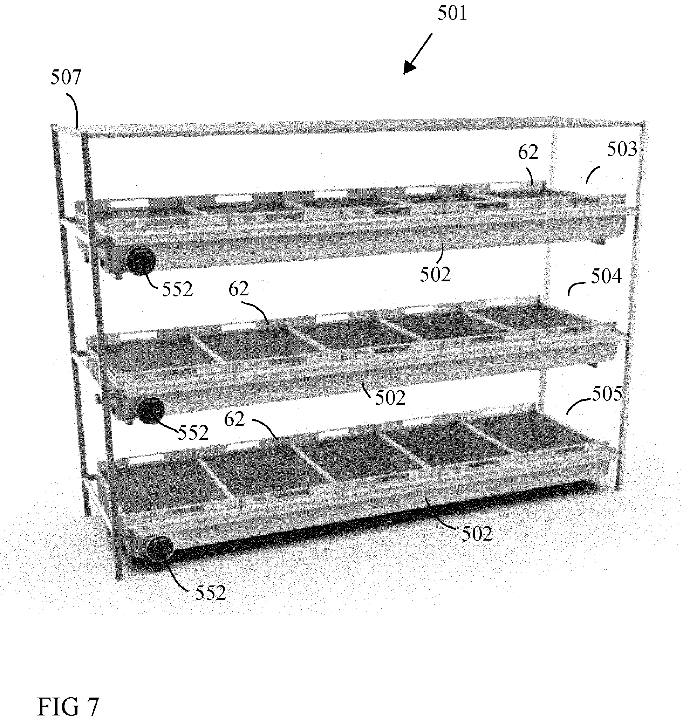

Figure 7 shows a perspective view of an aeroponic apparatus according to the invention ready for use. The apparatus comprises racked arrangement 501 of three grow beds 503, 504, 505 each grow bed having a grow bed tray 502 and five plant support trays 62. The grow beds 503, 504, 505 are supported on a shelving rack 507. Each grow bed 503, 504, 505 may be individually controlled by control panels 552. Generally, there may be additional software control system to operate a farming facility.

The aeroponics apparatus according to the invention is generally for greenhouses and vertical crop production, especially commercial greenhouses and vertical farms. In practice, the apparatus may comprise a hollow grow bed formed of one or more grow bed trays, each grow bed/grow bed tray may have a front end, a back end, a profiled base, and open upper face. The base of a grow bed tray may comprise one or more sumps or a gradient/taper dependent on bed width, in the base of the grow bed tray/grow bed for collecting directing aqueous nutrient solution in a particular location.

Generally, each ultrasonic transducer may be controlled independently.

The apparatus may have standardised interfaces in the grow bed structure for the introduction of sensors and additional modular apparatus. The ends of the grow bed may be detachable and detachably fixed to another grow bed using fixing attachments. The grow bed ends may include T sections for attachment of multiple beds together into a contiguous system, an end section that encloses the internal area and contains interfaces for piping tubing attachment.

The apparatus generally includes at least one port that may be an inlet, an outlet or both an inlet and outlet for the nutrient solution. Solution may be provided from a nutrient solution reservoir through pipe/tube/conduits and driven by gravity of a relatively low-pressure pump. There may be other fluid inlets and outlets above the water line for use of gaseous and visual sensory equipment and supply of gases (e.g. air, oxygen and/or carbon dioxide)

In use, a plant support medium may be arranged across the grow bed tray/grow bed to support growing plants and to reduce the loss of moisture. The plant support may be fibrous. The plant support generally will support the crop plants such that their leaves, crown and fruits are above the plant support and the roots suspended below where the roots can contact the mist generated by the nebulizer. This is useful because it allows space for equipment for harvesting, monitoring, or otherwise tending the crop plants. An additional advantage of a plant support medium is to reduce or prevent the escape of aerosol / mist (and hence moisture) from the root space since it is important to maintain humidity control within the apparatus, especially over the humidity of the root space. The apparatus may therefore have rails or other mechanisms that allow movement or positioning of harvesting, monitoring or other tending devices.

The apparatus may comprise lighting fixings for suspension of lighting above the grow bed/grow bed trays and may, in use also comprise lighting attached to the lighting fixings.

The apparatus may have an attachment portion for attachment of a nebulizer at the base of the grow bed tray and may comprise an ultrasonic transducer and an acoustically designed holder for holding the ultrasonic transducer. The ultrasonic transducer will usually comprise one or more piezoelectric devices. The holder will usually be made of acoustically appropriate material (i.e. material with suitable acoustic properties) and will have a suitable form factor for effective dispersion of ultrasonically generated mist. The holder and/or ultrasonic transducer may be detachable from the grow bed/grow bed tray and from each other for maintenance.

The nebulizer, lighting, sensors where present and other powered devices will also have electrical connector for connection to a power supply.

The aeroponic apparatus allows for a method for vertical hydroponic or aeroponic greenhouse crop production, the method comprising connecting the grow bed to nutrient solution reservoir via tubing and a pump and allows use of both aeroponic production, but also hydroponic production if desired.

The aeroponic method may comprise pumping nutrient solution from the reservoir into the grow bed through the tubing at sufficient quantity that the troughs (i.e. the grow bed tray or grow bed trays) have sufficient nutrient solution to operate efficiently full, at which point the nutrient solution level is maintained at the optimal level for activation of the ultrasonic transducers. During atomisation, usually the troughs will be partially filled. More nutrient solution results in dissipation of energy before it reaches the surface at which the aerosol is generated. Each transducer may therefore have a focal point at which atomisation is most effective.

The ultrasonic transducers are activated at a predetermined frequency and power to control droplet size to ensure the most efficient deposition of nutrient solution on to plant roots. This depends on the stage of growth of the roots and density of the root bed. For example, smaller droplets may be used for dense beds and older plants, larger droplet sizes for less dense beds and younger plants.

The less preferred hydroponic method may comprise adjusting the height of the plant support in the grow bed tray, to reduce the distance between the support and the base of the grow bed tray grow bed. Usually, however, the grow bed tray would be filled with nutrient solution so that the plant roots are immersed in the nutrient solution, when present. Nutrient solution may be pumped from the reservoir into the grow bed tray/grow bed so that the bed is full, at which point the water level is maintained at the optimal level for hydroponic growth of plants.

The apparatus of the invention is particularly advantageous because it enables the user to exercise greater control over droplet atomisation generating a predictable size distribution of droplets, with a characteristic dispersion of aerosol. The present invention allows control of droplet size with an or a plurality of ultrasonic transducers by adjusting and controlling the driving frequency. Furthermore, the control of droplet flow rate (speed) and dispersion (velocity) is possible by manipulating the drive circuitry of the transducer. This is controlled by the driving voltage/current. Thus, generally, such control may be achieved by having one or more ultrasonic transducers in the holder. The piezoelectric disc characteristics of the individual transducers are used to select transducers that, when activated, generate droplets of a suitable size and/or speed. The transducers may be arranged in such a way that a predetermined section of the water column within the grow bed is excited to the point of atomisation into droplet form. The transducers are mounted in a holder which may conduct the vibrations generated within the nebulizer through the base of the grow bed with minimal dissipation of energy. The holder preferably also provides a protective casing, compression of the piezoelectric materials (especially uniform compression), material that acts as a heat sink, and a structural support to hold the transducers in place.

The apparatus allows generation of droplets of nutrient solution, of controlled size and behaviour, through ultrasonic atomisation by activating the ultrasonic transducers with predetermined droplet size.

The nutrient solution may be prepared using appropriate nutrients dissolved in water or may be a nutrient solution derived from other processes for example fish farming, in particular, aquaponics. A combination of aquaponics and aeroponics/hydroponics of the present invention could be advantageous.

Crops that may be suitable for the apparatus and method of the present invention include (but are not limited to) salad crops (for example baby-leaf lettuce, rocket, watercress), herbs (for example basil, coriander), spring onions, root vegetables (for example carrots, radish, wasabi), fruiting crops (for example peppers, strawberries, tomatoes) and micro-greens (for example radish, pea, sunflower, leek).

### Examples

### Examples 1 to 8

A number of crop plants were grown in trials using the aeroponic apparatus according to the invention as illustrated in Figure 7 for up to 19 days.

Conditions for the trials are set out in Table 1 together with results of growth rate and yield using the aeroponics apparatus of the invention. The crops were coriander, fennel, leek, pea (Style), radish (Rioja), radish (Sangria), red cabbage and sunflower.

**Table 1. Examples under aeroponic conditions according to the invention.**

| Example | Crop | Seed Weight / g | Harvest Weight / g | Growing Time / Days | Plant Support Tray Area / m² | Yield / g m⁻² | Growth Rate / g m⁻² day⁻¹ |
|---|---|---|---|---|---|---|---|
| 1 | Coriander | 60 | 276 | 15 | 0.25 | 1104 | 74 |
| 2 | Fennel | 60 | 237 | 12 | 0.25 | 948 | 79 |
| 3 | Leek | 89 | 392 | 15 | 0.25 | 1568 | 105 |
| 4 | Pea Style | 357 | 747 | 16 | 0.25 | 2988 | 187 |
| 5 | Radish Rioja | 56 | 640 | 11 | 0.25 | 2560 | 233 |
| 6 | Radish Sangria | 45 | 747 | 11 | 0.25 | 2988 | 272 |
| 7 | Red Cabbage | 9 | 256 | 12 | 0.25 | 1024 | 85 |
| 8 | Sunflower | 223 | 1034 | 13 | 0.25 | 4136 | 318 |

Further aspects of the present disclosure are set forth in the following numbered paragraphs:
1. Aeroponics apparatus comprising,
   a grow bed tray having a base and at least two side-walls,
   the grow bed tray being adapted to hold a plant support at a position spaced from the base of the grow bed tray, and
   a nebulizer for nebulizing nutrient solution, the nebulizer located at the base of the grow bed tray and comprising an ultrasonic transducer and a fixing portion for fixing the ultrasonic transducer in position.
2. Aeroponics apparatus according to paragraph 1, wherein the fixing portion comprises an adhesive, optionally an epoxy adhesive.
3. Aeroponics apparatus according to either paragraph 1 or paragraph 2, wherein the fixing portion comprises a holder, optionally a holder that is detachable from the grow bed tray.
4. Aeroponics apparatus according to paragraph 3, wherein the ultrasonic transducer is detachable from the holder.
5. Aeroponics apparatus according to either paragraph 3 or paragraph 4, wherein the holder encloses the ultrasonic transducer.
6. Aeroponics apparatus according to any one of the preceding paragraphs, wherein the ultrasonic transducer or ultrasonic transducers is mounted under the base of the grow bed tray.
7. Aeroponics apparatus according to paragraph 6, wherein the ultrasonic transducer or ultrasonic transducers is/are held in a holder so that the ultrasonic transducer(s) is/are in contact with, and preferably compressed against, the base of the grow bed tray.
8. Aeroponics apparatus according to any one of the preceding paragraphs, further comprising one or more nebulizer shields to protect the or each ultrasonic transducer, in use.
9. Aeroponics apparatus according to any one of the preceding paragraphs, comprising at least two ultrasonic transducers.
10. Aeroponics apparatus according to any one of the preceding paragraphs, wherein the or each grow bed tray comprises 2 to 48 ultrasonic transducers, preferably 4 to 36 ultrasonic transducers, more preferably 6 to 24 ultrasonic transducers.
11. Aeroponics apparatus according to either paragraph 9 or paragraph 10, wherein each ultrasonic transducer may be controlled independently.
12. Aeroponics apparatus according to any one of the preceding paragraphs, wherein the or each ultrasonic transducer is a piezoelectric transducer.
13. Aeroponics apparatus as any one of the preceding paragraphs, wherein the or each ultrasonic transducer has a resonant frequency, preferably in the kilohertz or megahertz range, and more preferably in the range 200 kHz to 100 MHz.
14. Aeroponics apparatus according to any one of the preceding paragraphs, further comprising at least one liquid port, optionally, wherein the liquid port comprises a liquid inlet for allowing nutrient solution to flow into the base of the grow bed tray.
15. Aeroponics apparatus according to any one of the preceding paragraphs, wherein the nebulizer is located at the base of the grow bed tray.
16. Aeroponics apparatus according to either paragraph 14 or paragraph 15, wherein the liquid port is connectable to an inlet pipe connected to a reservoir, the reservoir for holding nutrient solution.
17. Aeroponics apparatus according to paragraph 16, further comprising a pump for pumping nutrient solution from the reservoir into the liquid port.
18. Aeroponics apparatus according to any one of paragraphs 14 to 17, wherein the nutrient solution is a by-product of aquaculture.
19. Aeroponics apparatus according to any one of the preceding paragraphs, wherein the grow bed tray is adapted to hold a plant support spaced from the base of the grow bed tray, optionally by one or more supports, optionally located on the sidewalls of the grow bed tray.
20. Aeroponics apparatus according to any one of the preceding paragraphs, wherein one or more of the sidewalls are detachable.
21. Aeroponics apparatus according to any one of the preceding paragraphs, further comprising grow bed tray attachments to attach two or more grow bed trays together.
22. Aeroponics apparatus according to any one of the preceding paragraphs, comprising a grow bed comprising a plurality of grow bed trays.
23. Aeroponics apparatus according to any one of the preceding paragraphs, further comprising one or more sensor fixings for fixing sensors in the grow bed tray, optionally further comprising one or more sensors selected from moisture, light, pH, temperature, carbon dioxide, oxygen, infrared, ultrasonic sensors fixed to the sensor fixings.
24. Aeroponics apparatus according to any one of the preceding paragraphs, further comprising at least one plant support.
25. Aeroponics apparatus according to paragraph 24, wherein the plant support comprises a plant support tray.
26. Aeroponics apparatus according to any one of the preceding paragraphs, comprising at least one plant support, and nutrient solution covering the nebulizer.
27. Aeroponics apparatus according to any paragraph 26, further comprising crops in the plant support, the roots of the crops, in use, being located in the root space between the plant support and the base of the grow bed tray.
28. A method for crop production, the method comprising,
   a) providing aeroponics apparatus according to any one of paragraphs 1 to 27,
   b) providing a plant support at the position spaced from the base of the grow bed tray,
   c) providing crops in the plant support, and
   c) either:
      i) flowing nutrient solution into the base of the grow bed tray to contact by immersion at least the roots of the crops, and/or
      ii) providing nutrient solution at the base of the grow bed tray and nebulizing the nutrient solution so that the nebulized aerosol nutrient solution contacts at least the roots of the crops, optionally in the root space.
29. A method according to paragraph 28, wherein nebulizing the nutrient solution comprises nebulizing the nutrient solution to provide a controlled droplet size distribution.
30. A method according to paragraph 29, wherein the droplet size distribution comprises droplets having a diameter in the range 1 to 100 µm.
31. A method according to any one of paragraphs 28 to 30, further comprising providing a root density sensor, determining the density of the root bed, nebulizing the nutrient solution to provide a controlled droplet size distribution corresponding to the predetermined optimal droplet size distribution for the density of the root bed.
32. A method according to any one of paragraphs 28 to 31, wherein the nutrient solution comprises a by-product of aquaculture.

## Claims

1. Aeroponics apparatus comprising,
a grow bed tray having a base and at least two side-walls,
the grow bed tray being adapted to hold a plant support at a position spaced from the base of the grow bed tray, and
a nebulizer for nebulizing nutrient solution, the nebulizer located at the base of the grow bed tray and comprising an ultrasonic transducer and a fixing portion for fixing the ultrasonic transducer in position.

2. Aeroponics apparatus as claimed in claim 1, wherein the ultrasonic transducer or ultrasonic transducers is/are mounted under the base of the grow bed tray.

3. Aeroponics apparatus as claimed in claim 2, wherein the ultrasonic transducer or ultrasonic transducers is/are held in a holder so that the ultrasonic transducer(s) is/are in contact with, and preferably compressed against, the base of the grow bed tray.

4. Aeroponics apparatus as claimed in any one of the preceding claims, comprising at least two ultrasonic transducers, optionally wherein the or each grow bed tray comprises 2 to 48 ultrasonic transducers, preferably 4 to 36 ultrasonic transducers, more preferably 6 to 24 ultrasonic transducers.

5. Aeroponics apparatus as claimed in claim 4, wherein each ultrasonic transducer may be controlled independently.

6. Aeroponics apparatus as claimed in any one of the preceding claims, wherein the or each ultrasonic transducer is a piezoelectric transducer.

7. Aeroponics apparatus as any one of the preceding claims, wherein the or each ultrasonic transducer has a resonant frequency, preferably in the kilohertz or megahertz range, and more preferably in the range 200 kHz to 100 MHz.

8. Aeroponics apparatus as claimed in any one of the preceding claims, further comprising at least one liquid port, optionally, wherein the liquid port comprises a liquid inlet for allowing nutrient solution to flow into the base of the grow bed tray.

9. Aeroponics apparatus as claimed in any one of the preceding claims, wherein the nebulizer is located at the base of the grow bed tray.

10. Aeroponics apparatus as claimed in any one of the preceding claims, comprising a grow bed comprising a plurality of grow bed trays.

11. Aeroponics apparatus as claimed in any one of the preceding claims, further comprising at least one plant support, optionally wherein the plant support comprises a plant support tray.

12. A method for crop production, the method comprising,
a) providing aeroponics apparatus as claimed in any one of claims 1 to 11,
b) providing a plant support at the position spaced from the base of the grow bed tray,
c) providing crops in the plant support, and
c) either:
i) flowing nutrient solution into the base of the grow bed tray to contact by immersion at least the roots of the crops, and/or
ii) providing nutrient solution at the base of the grow bed tray and nebulizing the nutrient solution so that the nebulized aerosol nutrient solution contacts at least the roots of the crops, optionally in the root space.

13. A method as claimed in claim 12, wherein nebulizing the nutrient solution comprises nebulizing the nutrient solution to provide a controlled droplet size distribution, optionally wherein the droplet size distribution comprises droplets having a diameter in the range 1 to 100 µm.

14. A method as claimed in any one of claims 12 to 13, further comprising providing a root density sensor, determining the density of the root bed, nebulizing the nutrient solution to provide a controlled droplet size distribution corresponding to the predetermined optimal droplet size distribution for the density of the root bed.

15. A method as claimed in any one of claims 12 to 14, wherein the nutrient solution comprises a by-product of aquaculture.
